Europäisches Patentamt

European Patent Office

Office européen des brevets

(11) Publication number: **0 181 736**
A1

# (12) EUROPEAN PATENT APPLICATION

(21) Application number: **85307847.5**

(22) Date of filing: **30.10.85**

(51) Int. Cl.⁴: **F 16 F 15/30**
**F 16 C 15/00**

(30) Priority: **03.11.84 GB 8427875**

(43) Date of publication of application:
**21.05.86 Bulletin 86/21**

(84) Designated Contracting States:
**BE DE FR GB IT NL SE**

(71) Applicant: **The British Petroleum Company p.l.c.**
**Britannic House Moor Lane**
**London EC2Y 9BU(GB)**

(72) Inventor: **Duff-Barclay, Ian**
**The British Petroleum Company plc Chertsey Road**
**Sunbury-on-Thames Middlesex, TW16 7LN(GB)**

(72) Inventor: **Mayer, Rayner Michael**
**The British Petroleum Company plc Chertsey Road**
**Sunbury-on-Thames Middlesex, TW16 7LN(GB)**

(74) Representative: **Crack, Richard David et al,**
**c/o The British Petroleum Company plc Patents Division**
**Chertsey Road**
**Sunbury-on-Thames Middlesex, TW16 7LN(GB)**

(54) Apparatus for storing kinetic energy.

(57) A kinetic energy storage system comprises a flywheel (1) mounted on a rotatable shaft (2) which rotatable shaft (2) is mounted on bearings (28, 29, 78 and 80). The flywheel (1) is located in a housing (3) which is constructed to contain the flywheel (1) or fragments thereof in the event of failure. Means (50) are provided for maintaining a reduced pressure within the housing (3) and also to effect cooling, preferably by circulating oil, of the bearings (28, 29, 78 and 80) on which the rotatable shaft (2) is mounted. Sensors (11, 12, 13, 14 and 15) are included for measuring one or more of the oil temperature, oil pressure, speed of rotation of the flywheel, vibration of the housing (3) and pressure within the housing (3) and a monitor (17) capable of interpreting signals from the sensors and determining whether the system is operating within predetermined parameters.

EP 0 181 736 A1

./...

FIG.1

## APPARATUS FOR STORING KINETIC ENERGY

This invention relates to a kinetic energy storage system. In particular the invention relates to a flywheel energy storage system.

The ability of flywheels to accept and discharge energy over relatively short periods of time has been known for many years and energy storage flywheels have been used, or proposed for use in a variety of applications. One application which has received increasing attention in recent years is the use of a flywheel as a means of storing kinetic energy in motor vehicles in order to improve fuel economy.

Safety is an important factor in any flywheel energy storage system but is particularly important where the system is to be used in passenger carrying vehicles. In the event of failure of a flywheel, the stored energy must be safely dissipated or absorbed. Thus, the flywheel should be contained in a housing which is capable of preventing the penetration of the flywheel or fragments thereof under all conditions. The housing should also be able to contain the flywheel during a possible collision and should also be able to withstand impacts from stones and road debris. Apart from safely containing the flywheel, the energy storage system should be adapted for safe operation.

A flywheel energy storage system has now been invented which is not only effective at accepting, storing and discharging kinetic energy but is also adapted for safe operation.

According to the present invention a kinetic energy storage

1

system comprises a flywheel mounted on a rotatable shaft which rotatable shaft is mounted on bearings, the flywheel being located within a housing, means for maintaining a reduced pressure within the housing, the housing being adapted to contain the flywheel or fragments thereof in the event of failure and means to effect cooling of the bearings on which the rotatable shaft is mounted.

The system preferably further comprises a plurality of sensors and a monitor which is operatively connected to the sensors and capable of interpreting the signals from the sensors and determining whether the system is operating within predetermined parameters. Preferably the monitor is capable of producing a signal indicating whether the system is operating with the above mentioned predetermined parameters.

The flywheel and housing may be made of metal e.g. steel or aluminium but they are preferably manufactured from fibre reinforced composite materials.

The kinetic energy storage system can further comprise a speed transfer means such as a reduction gearing operatively connected to the rotatable shaft and adapted for connection to a second rotatable shaft whereby power can be fed to, or taken from the flywheel via the first rotatable shaft, the speed of the second rotatable shaft being less than that of the first rotatable shaft.

The system can include means for evacuating the housing, conveniently in the form of a vacuum pump, operable continuously or intermittently.

The means to effect cooling of the bearings conveniently involves the use of a cooling fluid such as oil and can comprise a housing for the bearings, the housing being provided with a chamber having an inlet and outlet for cooling oil. The chamber can conveniently surround the housing and be of annular form although its disposition and shape are not critical.

An oil reservoir is preferably provided for oil both for the speed transfer means and for the cooling means for the bearings of the first rotatable shaft. The oil reservoir may conveniently be located at a position between the housing and the speed transfer means.

Preferably the sensors are capable of measuring one or more of the oil pressure, the oil temperature, the speed of rotation of the flywheel, the vibration of the housing and the pressure within the housing.

Conveniently the monitor includes a microprocessor capable of receiving the signals from the sensors in an analogue form and converting said signals into a digit form and determining whether the system is operating within the above mentioned predetermined parameters.

The means for maintaining the reduced pressure in the housing preferably comprises a sealing system for effecting a seal between the rotatable shaft and the housing.

The seal may be provided by a sealing member located between two members one of which is rotatable with the shaft the other being stationary, which members are magnetically biased towards each other. Conveniently the seal may be provided by a magnetic seal which is a known type of seal in which a carbon element, usually in the form of a ring, is maintained against a metal surface by a magnetic force between a magnetisable carrier in which the element is positioned and a permanent magnet.

Many of the known flywheel designs may be used in system according to the present invention. A preferred design is described and claimed in the applicants' European patent application No. 0145182. The flywheel disclosed comprises a rim which is a substantially circular ring mounted on a central portion which central portion comprises at least one, and preferably at least two, circular dished members each of which has a specific modulus which is less than the specific modulus of the rim, each dished member being curved such that increasing rotational speed tends to elastically deform the dished member, straightening the curve, thereby increasing the diameter of the dished member. In a preferred embodiment, the central portion comprises at least two circular dished members each of which has a central hole and comprises three integrally formed annular portions, two of the

portions being curved and being positioned on either side of the third portion which is straight or curved.

The housing used in the present invention is capable of containing the flywheel or fragments thereof in the event of failure and is also sufficiently air-tight to enable a partial vacuum to be maintained within the housing. A housing which is particularly suitable for containing the flywheel is disclosed and claimed in the applicants' European patent application No. 0127975. This apparatus comprises at least two parts which together form an enclosure within which the flywheel can be rotated which parts are secured together by a length of a high tensile strength tape which is wrapped around the parts to provide at least one layer of tape overlapping at its edges which envelops and is in contact with at least 50% of the surface area of the enclosure such that a point loading caused by the impact of the flywheel or a part thereof, with the inner surface of the housing is transformed into a loading over the surface of the parts wrapped with tape. The tape-wrapped enclosure is preferably mounted within a relatively rigid outer casing.

The internal dimensions of the housing are slightly larger than the maximum dimensions of the flywheel. When a flywheel is rotated at increasing speed, the whole flywheel expands radially and the rim expands circumferentially. Thus, the diameter of the internal dimensions of the housing are from 1% to 3% larger than the dimensions of the flywheel when it is operating at its maximum operating speed.

Suitably, the housing comprises three parts viz a central portion and two end pieces; the central portion defines a volume which is substantially circular in cross-section along one axis but is not enclosed at either end of this axis and the end pieces are adapted to cover the open ends of the central portion. The volume of the central portion may be sufficiently large to accomodate the whole of the flywheel. Preferably, the tape envelopes and is in contact with at least 70% of the surface area of the housing. Certain areas which are unlikely to be subjected to impact by the flywheel or a part thereof in the event of failure may be left uncovered such as, for example, areas around apertures in the housing through which passes the rotatable shaft on which the flywheel or other rotatable body is mounted.

Generally, the flywheel will be cylindrical in which case the central portion is preferably an open ended cylinder and the end pieces are adapted to cover the ends of the cylinder.

The housing may be mounted within an outer casing which partially or completely encloses the housing. This outer casing may carry the bearings about which the flywheel rotates, may be designed to protect the housing from stones and road debris and may provide some protection against fire. The outer casing may, if it totally encloses the housing, also be sufficiently air-tight to enable a partial vacuum to be maintained within the casing.

In 0127975 there is disclosed a substantially rigid outer casing within which is mounted a inner casing which inner casing comprises an open ended cylindrical section and two end pieces adapted to cover the ends of the cylindrical section, the end pieces and the cylindrical section are deformable under load and are held together by a length of a high tensile strength tape which is wrapped around the end pieces and cylindrical section.

Preferably the bearings are vibration damped. Vibration damped bearings are known and comprise bearings mounted in a housing which has a pair of spaced apart O-ring seals. Oil is pumped through the space between the O-rings under pressure. The oil acts as a heat transfer medium which assists in cooling the bearings and also provides a certain amount of damping for the shaft.

The gear box connected to the rotatable shaft is a conventional step-down gear box which provides the interface between the relatively high speed rotatable shaft and the drive shaft to which the apparatus is connectable. Generally the drive shaft will rotate at a lower speed than the rotatable shaft on which the flywheel is mounted.

Sensors are mounted in the apparatus to provide information on the condition of the apparatus to a monitor which is capable of interpreting the signals from the sensors and emitting a signal indicating whether or not the apparatus is operating within predetermined parameters.

The parameters measured by the sensors may include the speed of rotation of the flywheel, the pressure and temperature of the oil, vibration of the housing and the vacuum within the housing. Conventional sensors may be used. For example, the speed sensor may be an eddy current proximity sensor, a piezoelectric accelerometer may be used to measure vibration and a heat element/thermocouple system may be used to measure vacuum. Conventional sensors used in the automotive industry may be used to measure oil pressure and temperature.

The sensors may be mounted on the housing for the flywheel and may be connected, via a termination box containing signal conditioning and/or amplifying components, to a monitor which is preferably a microprocessor. The monitor continuously scans the signals received from the sensors, interprets the values and decides whether or not the system is in a safe condition. Preferably the microprocessor can decide whether the system is in a safe condition, a hazardous condition or a potentially hazardous condition. On the basis of the interpretation of the data from the sensors the micrprocessor generates a signal which can be sent to the means controlling the input or output of energy to the apparatus.

The invention will be described with reference to the accompanying drawing which illustrate an embodiment of the invention.

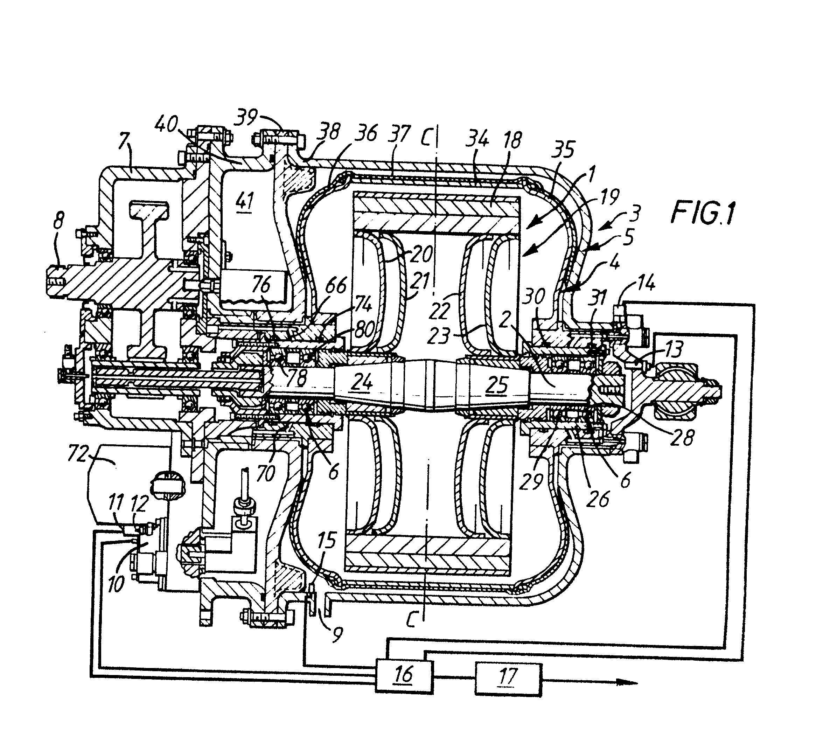

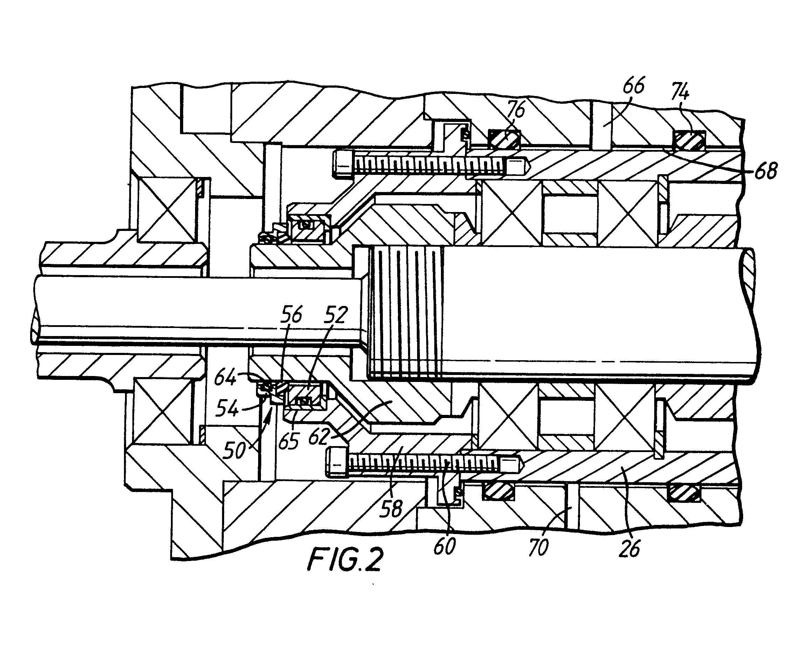

Figure 1 is a longitudinal section through the kinetic energy storage system and Figure 2 is an enlarged view of a portion of Figure 1.

A flywheel 1 is mounted on a rotatable shaft 2 with which it rotates. The flywheel is located inside a housing indicated generally be reference numeral 3. The housing 3 comprises an inner casing 4 mounted within a outer casing 5. The rotatable shaft 2 is mounted on vibration damped bearings 6 set in the housing 3. The bearings 6 are grease lubricated and are oil cooled, the cooling oil being supplied to the annular space 68 around a houring 26 for the

bearings. A speed transfer means in the form of gearbox 7 is connected to the rotatable shaft 2 and is connectable via input/output shaft 8 to a drive shaft (not shown). A remotely positioned vacuum pump (not shown) may be connected to the interior of casing 5 via opening 9. The vacuum pump can conveniently be mounted on the casing 3 or adjacent thereto. An oil pump 72 is attached to the casing 5. Five sensors 11, 12, 13, 14 and 15 for measuring oil temperature, oil pressure, speed of rotation of the flywheel, vibration of the casing and pressure inside the casing respectively are attached to the apparatus the locations shown and are connected via a termination box 16 to a monitor 17.

The flywheel 1 which is constructed as described in European patent application No. 0145182 comprises a rim 18 which is a substantially circular ring which rim is mounted on a central portion 19. The central portion 19 comprises four co-axial, substantially circular dished members 20, 21, 22 and 23 each of which has a central hole and comprises three integrally formed curved portions. All three of the curved portions are arcs of circles and are curved in the same direction. The four dished members 20, 21, 22, 23 are arranged in pairs with the substantially convex surfaces of each pair directed towards the centre line C-C of the flywheel 1.

The flywheel 1 is mounted on tapered portions 24, 25 of the rotatable shaft 2. The rotatable shaft 2 is mounted in oil cooled bearings indicated generally by 6 each of which comprises two spaced apart bearings 28 and 29 and 78 and 80 the former positioned in a bearing housing 26 which has two spaced apart O-ring seals 30 and 31 which effect vibration damping and act as retainers for the pressurised oil which effects cooling of the bearings. Oil is supplied under pressure to an annular space 68 around the bearing housing 26 by an oil pump operated by drive mechanism 12 from the shaft 2. The oil acts as a cooling medium for the bearings and also provides a certain amount of damping to the rotatable shaft 2.

The inner casing 4 of the housing 3 comprises a substantially cylindrical central portion 34 having domed end pieces 35 and 36.

these three parts are not rigidly connected but are secured together by a length of high tensile strength tape 37 which is wrapped around the three parts of the enclosure to provide at least one layer of tape, overlapping at its edges which envelops and is in contact with at least 50% of the surface area of the enclosure. Although the three parts 34, 35 and 36 of the enclosure 4 are not rigidly connected, interleaved castellations on the central portion 34 and domed end pieces 36 and 37 prevent relative rotation of the parts.

The outer casing 5 comprises three parts 38, 39 and 40 which enclose the enclosure 4. The casing 5 is relatively rigid and the casing together with the seals associated with the rotatable shaft is sufficiently air tight to enable a reduced pressure to be maintained within the housing 3 by the vacuum pump.

The gearbox 7 is a conventional 4:1 step down gearbox. The input/output shaft 8 may be connected to a transmission which enables the energy storage apparatus to be connected to an energy source e.g. a motor or to an energy outlet e.g. a drive axle.

The cavity 41 between parts 38 and 39 of the casing 5 may be used as an oil sump. This sump may supply oil to both the gearbox 7 and the oil damped bearings 6.

Sensors 11 and 12 positioned at the outlet of the oil pump 10 are oil pressure and oil temperature trasducers respectively. The oil pressure transducer may be, for example, a conventional pressure transducer such as is commonly used in the automotive industry. Typically the device may be capable of measuring up to 100 psig and has an analogue output of 1 to 5v. Thermocouples may be used to measure temperature but these may require amplification of the signals. Preferably, thermistor temperature sensors such as already used in the automotive industry are used. Such sensors may not require amplification. Typically the speed of the flywheel may be measured using an eddy current proximity sensor 13 in conjunction with a projection (not shown) on the rotatable shaft 2. A piezoelectric accelerometer 14 may be used to measure vibration of the casing. Such a device generally has a high output impedance. A buffer amplifier may therefore be required. This may conveniently be contained in the termination box 16. The vacuum sensor 15 may conveniently be a heat element thermocouple system. A thermocouple gauge will require signal conditioning i.e. amplification of the low voltage signal to a voltage compatible with the analogue-digital converter of the monitor 17 and provision of cold junction temperature compensation. The appropriate signal conditioning may be provided in the termination box 16. The termination box is preferably positioned on or adjacent to the energy storage apparatus. The termination box 16 is not only the distribution box for the leads to the various sensors but also provides buffering for sensitive signals which could not be transmitted along relatively long runs of cable. The monitor may be positioned at some distance from the termination box.

The monitor 17 is based on a microprocessor. The monitor receives the analogue signals from the sensors, converts the signals to a suitable digited form and then uses the data to determine whether the apparatus is operating within predetermined parameters. the microprocessor may also have a certain amount of memory which allows data to be stored for a period and then updated. The stored data may be used by the microprocessor to assess how the measured values are changing with time and may also provide information on events leading to a failure. If the monitor 17 decides that the apparatus is operating safely it generates a signal indicating that the values are within the set parameters. Typically this could be a square wave which is reversed after each evaluation. In this way, the microprocessor also effectively checks itself. If there is software or hardware failure, an error signal is generated.

The monitor could also be used to control the operation of the vacuum pump. In response to the measured value of the vacuum, the monitor could switch the vacuum pump on or off.

Referring to Figure 2 the sealing system is indicated generally by reference numeral 50 and comprises a rotary magnetic seal which is commercially available from the Magnetic Seal Corporation of America, West Barrington, Rhode Island, USA. The magnetic seal is retained by a carrier 58 which is secured to the bearing housing 26 by a bolt 60. The rotary magnetic seal comprises a permanent magnetic ring 52 to which is biased a magnetisable ring carrier 54. The ring carrier 54 carries a carbon ring sealing element 56. Contact between the carbon ring 56, which rotates with the shaft, and the magnetic ring 52, which is stationary, is maintained by the magnetic attraction between carrier 54 and the magnetic ring 52.

Sealing between a securing nut 62 and the ring carrier 54 (both of which rotate with the shaft) is effected by a deformable O-ring 64. A magnetic insulator 65 is located between the magnetic ring 52 and the carrier 58.

The cooling of the bearings is effected by oil being supplied through a radial inlet 66 to an annular chamber 68 surrounding the bearing housing 26. Oil is withdrawn from a radial outlet 70 (which is of smaller cross-section than inlet 66). Oil seals are provided by elastomeric rings 74 and 76.

The system for cooling the bearings 28 and 29 is similar to that described above for cooling bearings 78 and 80.

Claims:

1 A kinetic energy storage system comprising a flywheel (1) mounted on a rotatable shaft (2) which rotatable shaft (2) is mounted on bearings (28, 29, 78 and 80), the flywheel (1) being located within a housing (3), means (50) for maintaining a reduced pressure within the housing (3), the housing (3) being adapted to contain the flywheel (1) or fragments thereof in the event of failure and means (66, 68, 70) to effect cooling of the bearings (28, 29, 78 and 80) on which the rotatable shaft (2) is mounted.

2 A kinetic energy storage system as claimed in claim 1 characterised in that the means (66, 68, 70) to effect cooling of the bearings (28, 29, 78 and 80) comprises a circulating fluid cooling system.

3 A kinetic energy storage system as claimed in claim 2 characterised in that the cooling system comprises a housing for the bearings (28, 29, 78 and 80) the housing being provided with a chamber for circulating cooling oil.

4 A kinetic energy storage system as claimed in any one of the preceding claims characterised in that the system comprises a plurality of sensors (11, 12, 13, 14 and 15) and a monitor (17) which is operatively connected to the sensors and capable of interpreting the signals from the sensors and determining whether the system is operating within predetermined parameters.

5 A kinetic energy storage system as claimed in any one of the preceding claims characterised in that the system further comprises a speed transfer means (7) operatively connected to the rotatable shaft (2), the speed transfer means (7) being adapted to be connected to a drive shaft.

11

6 A kinetic energy storage system as claimed in any one of the preceding claims characterised in that the housing (3) comprises an inner casing adapted to contain the flywheel (1) or fragments thereof in the event of failure and an outer casing (5) adapted to protect the inner casing (4) from external forces.

7 A kinetic energy storage system as claimed in any one of the preceding claims characterised by the provision of an oil reservoir (41) for oil for the speed transfer means (7) and cooling oil for the bearings (28, 29) of the rotatable shaft (2).

8 A kinetic energy storage system as claimed in any one of the preceding claims characterised in that the sensors (11, 12, 13, 14 and 15) are capable of measuring one or more of the oil pressure, oil temperature, speed of rotation of the flywheel (1), vibration of the housing (3), and pressure within the housing (3).

9 A kinetic energy storage system as claimed in any one of the preceding claims characterised in that the monitor (17) includes a microprocessor capable of receiving the signals from the sensors in analogue form and converting said signals into a digit form and determining whether the system is operating within predetermined parameters.

10 A kinetic energy storage system as claimed in any one of the preceding claims characterised in that the means (50) for maintaining the reduced pressure in the housing comprises a sealing system for effecting a seal between the rotatable shaft (2) and the housing (3).

11 A kinetic energy storage system as claimed in claim 8 characterised in that a sealing member (56) is located between two members one of which (54) is rotatable with the shaft the other (52) being stationary with the housing, which members (52, 54) are magnetically biased towards each other.

12 A kinetic energy storage system as claimed in claim 9 characterised in that the inner casing (4) comprises a plurality of cooperating parts (34, 35, 36) and are secured together by a length of high tensile strength tape (37) which is wrapped around the parts.

13 A kinetic energy storage system as claimed in claim 9 or 10 characterised in that the outer casing (5) comprises a relatively rigid shell.

FIG.1

FIG.2

0181736

Application number

**EUROPEAN SEARCH REPORT**

EP 85 30 7847

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-4 208 921 (KEYES) <br><br> * Claims 3-6; figures * | 1,6,7, 10,11, 13 | F 16 F 15/30 <br> F 16 C 15/00 |
| A | DE-A-3 216 450 (VOLKSWAGEN) <br> * Pages 5,6; figures * | 1,4,9 | |
| D,A | EP-A-0 145 182 (B.P.) | | |
| | ----- | | |
| | | | **TECHNICAL FIELDS SEARCHED (Int Cl 4)** |
| | | | F 16 F 15/00 <br> F 16 C 15/00 |

The present search report has been drawn up for all claims

| Place of search | Date of completion of the search | Examiner |
|---|---|---|
| THE HAGUE | 27-01-1986 | FLORES E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82